# EUROPÄISCHE PATENTSCHRIFT

(11) **EP 2 499 545 B1**
(45) Veröffentlichungstag und Bekanntmachung des Hinweises auf die Patenterteilung: **02.03.2016**
(21) Anmeldenummer: 10794908.3
(22) Anmeldetag: 17.11.2010
(51) Int. Cl.: G05B 19/418, B65G 43/08, G06Q 10/00

(54) **VERFAHREN ZUM AUFBAU ODER ZUR AKTUALISIERUNG VON ROUTINGTABELLEN FÜR EIN MODULARES FÖRDERSYSTEM UND MODULARES FÖRDERSYSTEM**
METHOD FOR CONSTRUCTING OR UPDATING ROUTING TABLES FOR A MODULAR CONVEYOR SYSTEM AND MODULAR CONVEYOR SYSTEM
PROCÉDÉ D'ÉTABLISSEMENT OU DE MISE À JOUR DE TABLEAUX DE ROUTAGE POUR UN SYSTÈME DE CONVOYAGE MODULAIRE ET SYSTÈME DE CONVOYAGE MODULAIRE

(30) Priorität: 28.01.2010 DE 102010006093
(43) Veröffentlichungstag der Anmeldung: 19.09.2012
(73) Patentinhaber: Siemens Aktiengesellschaft, 80333 München (DE)
(72) Erfinder: KEUTNER, Konstantin, 85579 Neubiberg (DE)
(86) Internationale Anmeldenummer: PCT/EP2010/067654
(87) Internationale Veröffentlichungsnummer: WO 2011/091880

(56) Entgegenhaltungen:
- DE-A1-102005 027 687
- US-A1- 2002 107 714
- US-A1- 2004 111 339
- US-A1- 2004 167 811
- US-A1- 2006 007 863

## Beschreibung

Die Erfindung betrifft ein Verfahren zum Aufbau oder zur Aktualisierung von Routingtabellen für ein modulares Fördersystem sowie ein modulares Fördersystem zum Transport von Transportgütern.

Viele Transportsysteme, wie zum Beispiel Gepäckförderanlagen in Flughäfen, müssen zu befördernde Transportgüter innerhalb einer begrenzten Zeitspanne durch ein oft komplexes Transportnetzwerk mit einer Vielzahl von alternativen Transportwegen an einen vorgegebenen Zielpunkt transportieren. Die Transportsteuerung erfolgt dabei in der Regel mittels einer zentralen Hauptsteuerung, welche dafür sorgt, dass die Gepäckstücke den jeweiligen Zielpunkt auf Transportwegen erreichen. Die Vorgaben der zentralen Steuerung werden dann mittels untergeordneter Steuerungen umgesetzt.

Derartige zentrale Steuerungssysteme haben jedoch den Nachteil, dass im Vorfeld der Inbetriebnahme des Fördersystems umfangreiche Planungen erforderlich sind, um mögliche Transportwege im Vorfeld zu berechnen und Regeln für die Wahl eines Transportweges festzulegen.

Aus der DE 10 2005 027 687 A1 ist ein Fördersystem zum Transport von Fördergütern zu individuellen Zielen auf Förderrouten, die eine Vielzahl von Fördererabschnitten und Verzweigungsstellen aufweisen, bekannt, bei dem die Steuerung der einzelnen Teile des Fördersystems vollständig dezentral vorgenommen wird. Dazu weist eine elektronische Steuerung auf, durch die für jedes Fördergut eine zu dem jeweiligen Ziel führende Förderroute ermittelt wird und die Verzweigungsstellen jeweils entsprechend dieser Förderroute gesteuert werden. Des Weiteren sind ein Materialflussmonitor und eine Vielzahl von lokalen Materialflusssteuerungen vorgesehen. Der Materialflussmonitor verfügt über eine Sensorik zur Erfassung des Betriebszustandes. Die lokalen Materialflusssteuerungen sind funktional jeweils nur einer Teilmenge der Verzweigungsstellen und Förderabschnitte zugeordnet und verfügen über einen Speicher, in dem ein Förderstreckenplan des Fördersystems mit Förderabschnitten und diese charakterisierenden Daten gespeichert sind. Der Materialflussmonitor verfügt des Weiteren über eine Sendeeinrichtung, über welche die lokalen Materialflusssteuerungen über Störungen im Fördersystem informiert werden. Die Fördergüter weisen jeweils einen von der Steuerung maschinell lesbaren Informationsträger auf, auf welchem das jeweilige Ziel des Förderguts gespeichert ist. Die lokalen Materialflusssteuerungen verfügen über ein Routenprogramm, durch das unter Berücksichtigung gegebenenfalls vorliegender Störungen eine geeignete Förderroute zu dem jeweiligen gespeicherten Ziel eines in den funktionalen Zuständigkeitsbereich der jeweiligen lokalen Materialflusssteuerung gelangenden Fördergutes berechenbar ist.

Grundsätzlich ist es auch bekannt, den Verzweigungsstellen in einem Fördersystem Routingtabellen zuzuordnen, aus welchen in Abhängigkeit von einem für das jeweilige Gepäckstück vorgegebenen Zielpunkt für jedes Gepäckstück eine Richtungsinformation auslesbar ist.

Aus der US 2004/111339 A1 sind ein Verfahren zum Aufbau oder zur Aktualisierung von Routingtabellen für ein modulares Fördersystem zum Transport von Transportgütern zu jeweils zugewiesenen Zielpunkten, sowie das entsprechende modulare Fördersystem bekannt. Die Fördermodule senden dabei Kostennachrichten an unmittelbar vorhergehende Fördermodule und empfangen Kostennachrichten von unmittelbar nachfolgenden Fördermodulen, wobei die Kostennachrichten Informationen umfassen, zu welchen Kosten mindestens ein Zielpunkt des Fördersystems von dem jeweils sendenden Fördermodul aus erreichbar ist.

Dem Aufbau und der Aktualisierung von Routingtabellen kommt für eine zuverlässige Funktion des Fördersystems eine entscheidende Bedeutung zu.

Der Erfindung liegt daher die Aufgabe zugrunde, ein Verfahren zum Aufbau oder zur Aktualisierung von Routingtabellen für ein modulares Fördersystem sowie ein modulares Fördersystem zum Transport von Transportgütern zu jeweils zugewiesenen Zielpunkten anzugeben, welche eine zuverlässige und mit geringem schaltungs- und programmiertechnischem Aufwand verbundene Steuerung des modularen Fördersystems ermöglichen.

Diese Aufgabe wird einerseits gelöst durch ein Verfahren zum Aufbau oder zur Aktualisierung von Routingtabellen für ein modulares Fördersystem (1) zum Transport von Transportgütern zu jeweils zugewiesenen Zielpunkten (al; a2), wobei
- das Fördersystem (1) mehrere Fördermodule (m1-m10) aufweist, welche jeweils mindestens einen Eingang und mindestens einen Ausgang aufweisen, die Transportgüter von einem Ausgang eines Moduls (m1-m10) an einen Eingang eines nachfolgenden Moduls (m1-m10) übergeben werden können und zum Transport der Transportgüter verschiedene Transportwege verwendet werden können,
- jedem Fördermodul (m1-m10) jeweils eine Modulsteuerung (s1-s10) zum Steuern des jeweiligen Fördermoduls (m1-m10) zugeordnet ist, wobei die Modulsteuerungen(s1-s10) von Modulsteuerungen (s1-s10) unmittelbar nachfolgender Fördermodule (m1-m10) Kostennachrichten empfangen und an Modulsteuerungen (s1-s10) unmittelbar vorhergehender Fördermodule (m1-m10) Kostennachrichten senden können, wobei
   ▪ die Kostennachrichten Informationen umfassen, zu welchen Kosten mindestens ein Zielpunkt (al, a2) des Fördersystems (1) von dem jeweils sendenden Fördermodul (m1-m10) aus erreichbar ist, und
   ▪ die Übermittlung von Kostennachrichten durch die sendende Modulsteuerung (s1-s10) jeweils um eine Zeitspanne verzögert wird, welche proportional zum Anteil eines lokalen Kostenwertes des Moduls (m1-m10) an einem jeweils übermittelten Kostenwert ist.
      Erfindungsgemäß nutzt die eine Kostennachricht empfangende Modulsteuerung, falls diese einem Fördermodul (m1-m10) mit mindestens zwei Ausgängen zugeordnet ist (s1-s10), die übermittelten Kostenwerte um eine Routingtabelle aufzubauen oder zu aktualisieren, in welcher zu allen Ausgängen des jeweiligen Fördermoduls (m1-m10) Informationen speicherbar sind, welche Zielpunkte (al, a2) des Fördersystems (1) von dort aus zu welchen Kosten erreichbar sind. Außerdem sendet eine solche eine Kostennachricht empfangende Modulsteuerung, welche einem Fördermodul (mlm10) mit mindestens zwei Ausgängen zugeordnet ist (s1-s10), eine eigene Kostennachricht nur dann an Vorgängermodule, wenn die auf Grundlage des empfangenen Kostenwerts vorgenommene Aktualisierung der Routingtabelle für mindestens einen Zielpunkt zu einer Veränderung des kostengünstigsten Transportweges führt.

Andererseits wird die der Erfindung zugrunde liegende Aufgabe gelöst durch ein modulares Fördersystem zum Transport von Transportgütern zu jeweils zugewiesenen Zielpunkten mit mehreren Fördermodulen, welche jeweils mindestens einen Eingang und mindestens einen Ausgang aufweisen, wobei die Transportgüter von einem Ausgang eines Moduls an einen Eingang eines nachfolgenden Moduls übergeben werden können und zum Transport der Transportgüter verschiedene Transportwege verwendet werden können. Das Fördersystem weist außerdem den Fördermodulen jeweils zugeordnete Modulsteuerungen zum Steuern der Fördermodule auf, wobei die Modulsteuerungen Kommunikationsmittel aufweisen, um von Modulsteuerungen unmittelbar nachfolgender Fördermodule Kostennachrichten zu empfangen und an Modulsteuerungen unmittelbar vorhergehender Fördermodule Kostennachrichten zu senden. Die Kostennachrichten umfassen dabei Informationen, zu welchen Kosten mindestens ein Zielpunkt des Fördersystems von dem jeweils sendenden Fördermodul aus erreichbar ist. Erfindungsgemäß sind die Modulsteuerungen so ausgebildet, dass sie die eigene Übermittlung von Kostennachrichten jeweils um eine Zeitspanne verzögern, welche proportional zum Anteil eines lokalen Kostenwertes des zugeordneten Moduls an einem jeweils übermittelten Kostenwert ist.

Modulsteuerungen, welche einem Fördermodul mit mindestens zwei Ausgängen zugeordnet sind, sind außerdem so ausgebildet, dass sie die übermittelten Kostenwerte zum Aufbau oder zur Aktualisierung einer Routingtabelle benutzen und sie nach Empfang einer Kostennachricht von einem Nachfolgemodul eine eigene Kostennachricht an Vorgängermodule nur dann senden, wenn die auf Grundlage des empfangenen Kostenwertes vorgenommene Aktualisierung der Routingtabelle für einen Zielpunkt zu einer Veränderung des kostengünstigsten Transportweges führt.

Die vorliegende Erfindung schafft somit ein vollständig dezentral gesteuertes modulares Fördersystem, bei welchem im Vorfeld der Inbetriebnahme keinerlei Planungsaufwand zur Berechnung von Transportwegen und Festlegung von Transportregeln entsteht und welches eine hohe Robustheit aufweist.

Das erfindungsgemäße Verfahren und das erfindungsgemäße Fördersystem ermöglichen einen vollkommen selbständigen Aufbau und eine vollkommen selbständige Aktualisierung der Routingtabellen sowohl bei Inbetriebnahme als auch nach vorgenommenen Umbauten des Fördersystems. Auch eine Aktualisierung der Routingtabellen, welche zum Beispiel nach signifikanten Änderungen der Lastsituation und damit einhergehender Änderungen der Transportzeiten aufgrund von lokalen Überlastungen einhergeht, kann mit Hilfe der Erfindung vollkommen selbständig erfolgen.

Gemäß einer Ausführungsform der Erfindung dient mindestens ein Fördermodul als Startmodul, dessen Modulsteuerung für jeden Eingang des Moduls die Kosten ermittelt, zu welchen mindestens ein Zielpunkt des Fördersystems von dort aus erreichbar ist, und eine Kostennachricht, welche zumindest eine Information über den Zielpunkt und den zugehörigen Kostenwert umfasst, an die Modulsteuerungen der betroffenen Vorgängermodule übermittelt. Mit dem Begriff Vorgängermodul sei dabei ein Fördermodul bezeichnet, welches bezogen auf die Förderrichtung des Fördersystems unmittelbar vorgeschaltet ist und somit einen Übergabepunkt für Transportgüter an das nachfolgende Modul aufweist. "Betroffene Vorgängermodule sind somit diejenigen, welche einen Ausgang aufweisen, der zusammen mit dem entsprechenden Eingang des nachfolgenden Moduls einen Übergabepunkt bilden.

Modulsteuerungen für Fördermodule mit nur einem Ausgang berechnen nach Empfang einer Kostennachricht für jeden Eingang des Moduls kumulierte Kosten aus dem empfangenen Kostenwert und den jeweiligen lokalen Kosten des Moduls und senden eine Kostennachricht, welche zumindest eine Information über den betroffenen Zielpunkt sowie die zugehörigen kumulierten Kostenwerte umfasst, an die Modulsteuerungen der betroffenen Vorgängermodule. Modulsteuerungen für Fördermodule mit mindestens zwei Ausgängen aktualisieren nach Empfang einer Kostennachricht mit Hilfe des empfangenen Kostenwertes die jeweilige Routingtabelle und prüfen, ob die Aktualisierung einen bis dahin kostengünstigsten Transportweg zu einem Zielpunkt betrifft oder sich durch die Aktualisierung ein neuer kostengünstigster Transportweg zu diesem Zielpunkt ergibt. Ist das der Fall, berechnen die Modulsteuerungen für jeden Eingang des Moduls kumulierte Kosten aus dem empfangenen Kostenwert und den jeweiligen lokalen Kosten des Moduls und senden eine Kostennachricht, welche zumindest eine Information über den betroffenen Zielpunkt sowie die zugehörigen kumulierten Kostenwerte umfasst, an die Modulsteuerungen der betroffenen Vorgängermodule. Erfindungsgemäß wird dabei die Übermittlung von Kostennachrichten durch die sendende Modulsteuerung jeweils um eine Zeitspanne verzögert, welche proportional zum Anteil des lokalen Kostenwertes des Moduls am jeweils übermittelten Kostenwert ist.

Dadurch, dass Modulsteuerungen für Fördermodule mit mindestens zwei Ausgängen, welche häufig auch als Weichen oder Verzweigungsstellen bezeichnet werden, nach Empfang einer Kostennachricht von einem Nachfolgermodul eine eigene Kostennachricht an Vorgängermodule nur dann sendet, wenn die auf Grundlage des empfangenen Kostenwertes vorgenommene Aktualisierung der Routingtabelle zu einer Veränderung des kostengünstigsten Transportweges zu einem Zielpunkt führt, wird das Versenden nicht notwendiger Nachrichten und damit eine unnötige Belastung des Kommunikationsnetzes vermieden. Durch die Verzögerung der Übermittlung von Kostennachrichten durch die sendende Modulsteuerung um eine Zeitspanne, welche proportional zum Anteil des lokalen Kostenwertes des Moduls am jeweils übermittelten Kostenwert ist, wird weiterhin sichergestellt, dass die Modulsteuerung eines Fördermoduls stets die Kostennachricht, welche einen kostengünstigsten Transportweg betrifft, zuerst empfängt und damit Kostennachrichten an Vorgängermodule nur bezüglich dieses kostengünstigsten Transportweges weiterleitet. Würden die Kostennachrichten ohne diese gezielte Verzögerung unmittelbar weitergegeben, resultierte daraus unter Umständen eine Flut von Kostennachrichten mit Informationen über mögliche Transportwege, welche jedoch nicht die kostengünstigsten sind und somit im weiteren Verlauf durch nachfolgende Nachrichten aktualisiert würden. Insbesondere bei komplexen Topologien mit vielen rekonvergenten Pfaden könnte dies zu einer erheblichen Blindleistung führen, da die Anzahl der insgesamt möglichen Transportwege im ungünstigsten Fall exponentiell mit der Anzahl der Verzweigungen ansteigt.

Gemäß einer Ausführungsform der Erfindung dienen als Startmodule alle Fördermodule, welche mindestens einen Ausgang aufweisen, welcher als Zielpunkt des Fördersystems definiert ist. Auf diese Weise werden ausgehend von denjenigen Fördermodulen, welche Ausgänge aufweisen, welche auch als Zielpunkt des gesamten Fördersystems definiert sind, sukzessive alle Routingtabellen aller Weichen des Fördersystems mit entsprechenden Kostenwerten für die einzelnen Zielpunkte des Fördersystems gefüllt.

Gemäß einer weiteren Ausführungsform der Erfindung kann als Startmodul auch mindestens ein Fördermodul dienen, bei dem sich der lokale Kostenwert zwischen zumindest einem Eingang des Moduls und einem Ausgang des Moduls geändert hat. Auf diese Weise können alle dem betroffenen Fördermodul vorgeschalteten Fördermodule über eine Veränderung eines lokalen Kostenwertes eines Fördermoduls informiert werden. Durch die Vorgabe eines Mindestwertes, um den sich ein lokaler Kostenwert verändern muss, bevor eine Kostennachricht an die Vorgängermodule übermittelt wird, wird gewährleistet, dass nur signifikante Veränderungen der lokalen Kostenwerte, welche einen Einfluss auf die Festlegung von Transportwegen haben könnten, an die Vorgängermodule weitergeleitet werden. Dadurch kann wiederum unnötiger Datenverkehr vermieden werden.

Eine weitere Ausführungsform der Erfindung sieht vor, dass als Startmodul ein Fördermodul dient, bei welchem mindestens ein Vorgängermodul neu in das Fördersystem integriert wurde. Damit ist gewährleistet, dass ein neu in das Fördersystem integriertes Fördermodul unmittelbar über die Kosten der nachfolgenden Fördermodule informiert wird und an alle seine Vorgängermodule wiederum Kostenwerte weiterleiten kann, welche um die lokalen Kostenwerte des neu eingefügten Fördersystem aktualisiert sind. Handelt es sich bei einem neu integrierten Fördermodul um eine Weiche, so können auch alle Nachfolgemodule als Startmodule dienen, so dass das neue Fördermodul auch in die Lage versetzt wird, seine eigene Routingtabelle aufzubauen.

Kostenwerte werden im einfachsten Fall in Abhängigkeit von der Transportzeit bestimmt, welche sich zum Beispiel bei einem Gurtförderer aus dessen Geschwindigkeit und der jeweiligen Förderentfernung ergibt. Kostenwerte können aber auch alternativ oder zusätzlich in Abhängigkeit einer Belastung des Fördermoduls und/oder der Auslastung von Transportwegen bestimmt werden, so dass eine bedarfsgerechte optimale Steuerung des Fördersystems sichergestellt werden kann.

Gemäß einer Ausführungsform der Erfindung ist die Zeitspanne, um welche die Übermittlung von Kostennachrichten verzögert wird, um einen vorgegebenen Proportionalitätsfaktor von zum Beispiel 100 geringer als der Anteil des lokalen Kostenwertes des jeweiligen Moduls am jeweils übermittelten Kostenwert. Vorteilhaft wird der Proportionalitätsfaktor dabei derart festgelegt, dass die Verzögerungszeitspanne stets größer ist als eine Verzögerung, welche sich durch Verarbeitungszeiten und/oder Sendezeiten von Kostennachrichten ergeben kann. Eine derartige Festlegung des Proportionalitätsfaktors hat den Vorteil, dass Kostennachrichten über kostengünstigste Transportwege stets früher empfangen werden als gleichzeitig erzeugte Kostennachrichten, welche einen Transportweg betreffen, welcher nicht der kostengünstigste ist, auch dann, wenn der kostengünstigste Transportweg mehr Fördermodule umfasst als ein kostenintensiverer Transportweg.

Gemäß einer weiteren Ausführungsform der Erfindung werden im Rahmen der Übermittlung von Kostennachrichten an die jeweils betroffenen Vorgängermodule bereits geplante, aber noch nicht übermittelte frühere Kostennachrichten bezüglich des gleichen Zielpunktes storniert, was zu einer weiteren Vermeidung unnötigen Datenverkehrs beiträgt.

Weitere Merkmale und Vorteile der Erfindung ergeben sich aus Ausführungsbeispielen, welche in folgenden anhand der Zeichnungen erläutert werden. Es zeigen:
- Fig. 1: einen schematischen Übersichtsplan eines erfindungsgemäßen Fördersystems und
- Fig. 2: ein Flussdiagramm einer Ausführungsform des erfindungsgemäßen Verfahrens zum Aufbau von Routingtabellen für ein modulares Fördersystem.

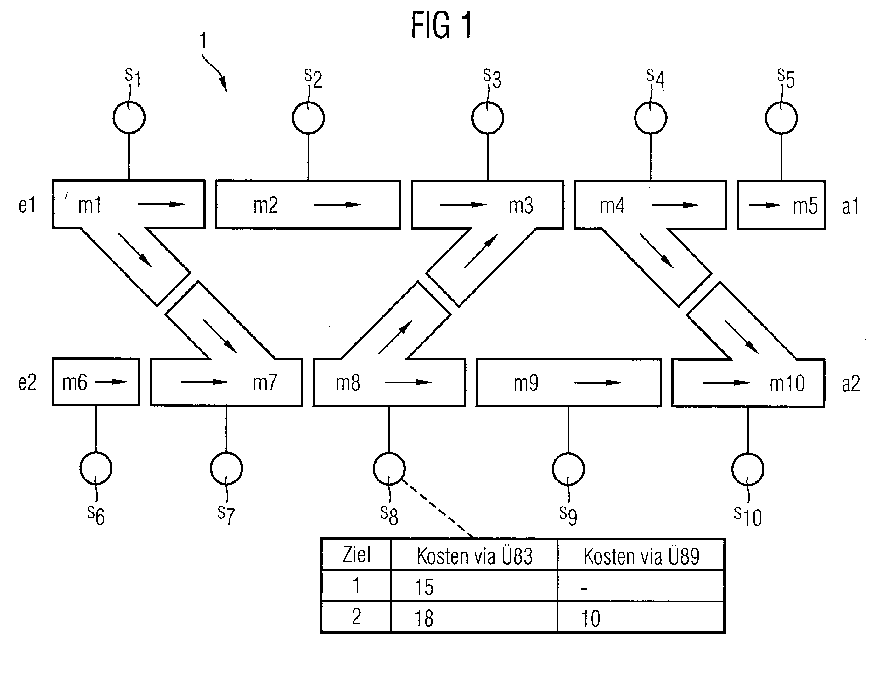

Das modulare Fördersystem 1 gemäß Fig. 1 ist aus einer Vielzahl von Fördermodulen m1-m10 aufgebaut. Die Fördermodule m1-m10 weisen dabei jeweils mindestens einen Eingang und einen Ausgang auf und sind derart angeordnet, dass zu befördernde Transportgüter, wie zum Beispiel Gepäckstücke, von einem Ausgang eines Fördermoduls an einen Eingang eines nachfolgenden Fördermoduls übergeben werden können. Das dargestellte Fördersystem 1 weist zwei Aufgabepunkt e1 und e2 auf, an welchen das Fördersystem 1 mit Transportgütern bestückt werden kann. Diese Aufgabepunkte e1 und e2 werden durch die Eingänge der Fördermodule m1 bzw. m6 gebildet. Die Ausgänge der Fördermodule m5 und m10 definieren Zielpunkte a1 bzw. a2 des Fördersystems, wobei jedem Transportgut, welches an einem der Aufgabepunkte e1 oder e2 in das Fördersystem eingebracht wird, einer der Zielpunkte a1 oder a2 als Transportziel zugewiesen ist. Diese Zuweisung erfolgt zum Beispiel in Form eines maschinell lesbaren Informationsträgers, welcher an dem Transportgut befestigt ist und auf welchem der jeweilige Zielpunkt des Transportgutes gespeichert ist. Um die maschinelle Auslesung der Informationsträger auf möglichst einfache Art und Weise bewerkstelligen zu können, empfiehlt es sich, diese als berührungslos auslesbare Informationsträger zu gestalten. Dies kann beispielsweise in Form von Barcode-Etiketten oder - Anhängern erfolgen. Es können aber auch Datenträger verwendet werden, welche durch einen Klarschriftleser, zum Beispiel OCR-Schrift, lesbar sind oder welche Transpondertechnik nutzen, wie zum Beispiel RFID-Tags.

Das dargestellte Fördersystem weist drei Fördermodule m1, m4 und m8 auf, welche mehr als einen Ausgang aufweisen und somit Weichen oder Verzweigungsstellen darstellen. Umgekehrt weisen die Fördermodule m3, m7 und m10 jeweils mehr als einen Eingang auf und dienen somit der Zusammenführung von Förderpfaden. Die Fördermodule m2, m5, m6 und m9 weisen keine Verzweigungen auf und dienen damit lediglich einem Weitertransport der Transportgüter. Neben den dargestellten Fördermodulen ist aber auch eine Vielzahl weiterer Ausführungsformen denkbar. Aufgrund der Anordnung der Fördermodule m1-m10 ergeben sich für Transportgüter, welche an einer der Aufgabestellen e1 oder e2 in das Fördersystem eingebracht werden, verschiedene Transportwege, auf welchen ein Transportgut an den jeweils zugeordneten Zielpunkt a1 oder a2 transportiert werden kann.

Jedem Fördermodul m1-m10 ist jeweils eine Modulsteuerung s1-s10 zugeordnet, welche in Fig. 1 lediglich schematisch angedeutet sind. Die Modulsteuerungen weisen jeweils nicht dargestellte Kommunikationsmittel auf, welche einen Datenaustausch mit benachbarten Modulsteuerungen, oder genauer gesagt mit Modulsteuerungen benachbarter Fördermodule ermöglichen. Dabei ist es für die Anwendbarkeit der Erfindung zumindest erforderlich, dass die Modulsteuerungen Nachrichten von Modulsteuerungen unmittelbar nachfolgender Fördermodule empfangen und Nachrichten an unmittelbar vorhergehende Fördermodule senden können. Vorteilhaft sind die Modulsteuerungen derart ausgestaltet, dass sie die Nachbarsteuerungen mit Hilfe von Plug-and-Play-Mechanismen erkennen und mit ihnen Daten austauschen können.

Zur Festlegung der Transportwege an Fördermodulen mit mehreren Ausgängen sind Routingtabellen vorgesehen, in welchen zu allen Ausgängen des Fördermoduls Informationen speicherbar sind, welche Zielpunkte des Fördersystems von dort aus zu welchen Kosten erreichbar sind. In Fig. 1 ist beispielhaft eine Routingtabelle dargestellt, wie sie von der Modulsteuerung s8 zur Steuerung des Fördermoduls m8 genutzt werden kann. Aus der Routingtabelle ist entnehmbar, dass der Zielpunkt a1 über einen Übergabepunkt Ü83 zu einem Kostenwert von 15 erreicht werden kann, während der Zielpunkt a2 am günstigsten über einen Übergabepunkt Ü89 zu einem Kostenwert von 10 erreichbar ist, aber zu höheren Kosten (18) auch über dem Übergabepunkt Ü83 erreicht werden kann. Mit dem Begriff Übergabepunkt Üxy sei dabei derjenige Punkt bezeichnet, an dem Transportgüter von einem Modul mx an ein Modul my übergeben werden können. Die Modulsteuerung legt dabei den Transportweg an einer Weiche oder einem Verzweigungspunkt unter Berücksichtigung der in der Routingtabelle enthaltenen Kostenwerte für den entsprechenden Zielpunkt fest. Im einfachsten Fall wählt sie beispielsweise denjenigen Übergabepunkt und damit Ausgang des Fördermoduls aus, welcher in der Routingtabelle für den entsprechenden Zielpunkt den geringsten Kostenwert aufweist.

Die Kostenwerte können dabei im einfachsten Fall Transportzeiten repräsentieren, welche sich zum Beispiel aus Transportgeschwindigkeiten und Transportentfernungen ergeben. Alternativ oder zusätzlich können aber auch weitere Kriterien, wie zum Beispiel die Belastung eines Fördermoduls und/oder die Auslastung von Transportwegen berücksichtigt werden.

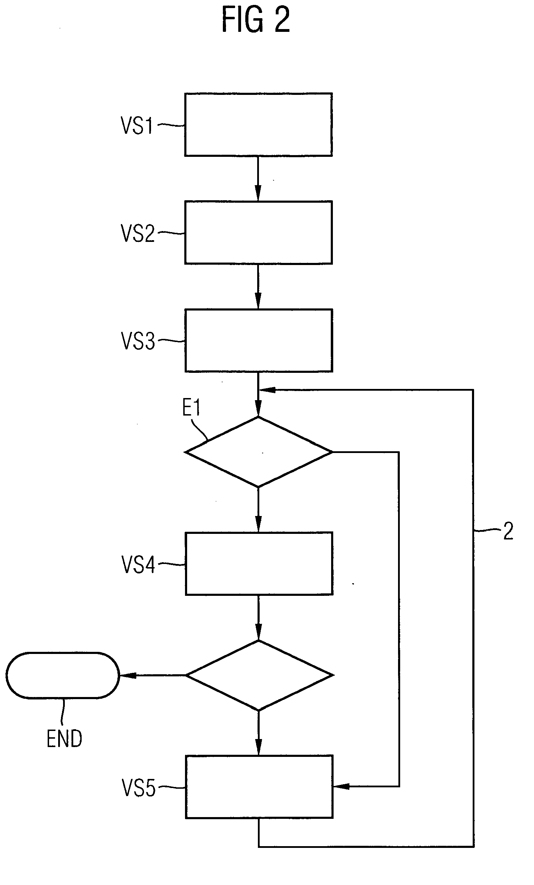

Dem Aufbau oder der Aktualisierung der Routingtabellen kommt für eine zuverlässige Funktion des Fördersystems eine entscheidende Bedeutung zu. Fig. 2 zeigt beispielhaft ein Flussdiagramm einer Ausführungsform des erfindungsgemäßen Verfahrens zum Aufbau der Routingtabellen, welches im Rahmen der Inbetriebnahme des Fördersystems ausgeführt werden kann.

Das erfindungsgemäße Verfahren besteht aus den folgenden Schritten, welche für jeden der Zielpunkte a1 und a2 des Fördersystems 1 initiiert werden. Beispielhaft wird das Verfahren für den Zielpunkt a2 beschrieben.
- VS1:: Das Fördermodul m10, dessen Ausgang als Zielpunkt a2 des Fördersystems 1 definiert ist, übernimmt die Rolle des Startmoduls. Dieses kann im Rahmen der Inbetriebnahme des Fördersystems 1, z.B. durch ein entsprechendes externes Signal an die zugeordnete Modulsteuerung s10 getriggert werden.
- VS2:: Die dem Startmodul m10 zugeordnete Modulsteuerung s10 bestimmt alle Eingänge und damit Übergabepunkte, von denen aus der Zielpunkt a1 erreichbar ist, und berechnet die jeweiligen lokalen Kostenwerte. Bei einer Anordnung des Fördersystems gemäß Figur 1 werden folglich die Übergabepunkte Ü410 und Ü910 identifiziert und für beide Übergabepunkte werden Kostenwerte ermittelt, welche im einfachsten Fall die Transportzeit wiedergeben, welche ein Transportgut benötigt, um von dem jeweiligen Übergabepunkt Ü410 oder Ü910 zum Zielpunkt a2 zu gelangen.
- VS3:: An alle Vorgängermodule m4 und m9 wird eine Kostennachricht gesendet, in welcher der Zielpunkt a2 sowie der jeweils zugehörige Kostenwert ab dem Übergabepunkt Ü410 bzw. Ü910 enthalten ist. Diese Kostennachricht wird mit einer Verzögerung gesendet, welche proportional zu dem jeweiligen lokalen Kostenwert des Fördermoduls m10 ist. Vorteilhaft weisen Kostennachrichten auch noch eine Information über den Absender, also die absendende Modulsteuerung auf.

Ist das Vorgängermodul ein Fördermodul mit mehr als einem Ausgang, wie das Fördermodul m4, so wird das Verfahren mit einem Schritt VS4 fortgesetzt, ansonsten mit einem Schritt VS5. Diese Verzweigung ist im Flussdiagramm mit Hilfe eines Entscheidungsblocks E1 dargestellt.
- VS4:: Die dem Vorgängermodul m4 zugeordnete Modulsteuerung s4 berechnet den lokalen Kostenwert bezüglich ihres internen Verzweigungspunktes für den Zielpunkt a2, addiert diesen zum übermittelten Kostenwert und speichert den kumulierten Kostenwert in seiner Routingtabelle in der Zeile für den Zielpunkt a2 in die Spalte für den lokalen Ausgang oder Übergabepunkt Ü410, welcher dem Absender s10 der empfangenen Kostennachricht entspricht. Anschließend vergleicht die Modulsteuerung s4 in der Zeile für diesen Zielpunkt a2 alle Kostenwerte miteinander. Ergibt sich dabei kein neuer kürzester Transportweg oder zumindest eine Veränderung des Kostenwertes des bis dahin kürzesten Transportweges, so wird keine weitere Verarbeitung angestoßen (Ende-Block END). Ergibt sich ein neuer kostengünstigster Transportweg oder verändert sich der Kostenwert des günstigsten Transportweges, so wird mit Schritt VS5 fortgefahren. Diese Entscheidung ist im Flussdiagramm mit Hilfe eines Entscheidungsblocks E2 dargestellt. Vorteilhaft werden bereits früher geplante Kostennachrichten an Vorgängermodule bezüglich des gleichen Zielpunktes storniert. Diese Stornierung kann aber auch noch im Rahmen des folgenden Verfahrensschrittes erfolgen.
- VS5:: Die Modulsteuerung s4 des Vorgängermoduls m4 berechnet nun den lokalen Kostenwert für den betroffenen Übergabepunkt Ü410 bezüglich aller ihrer Eingänge oder genauer gesagt Eingangs-Übergabepunkte, das heißt Eingängen, an welchen sie Transportgüter übergeben bekommen können. Im dargestellten Beispiel gemäß Figur 1 ist das nur der Übergabepunkt Ü34. Der jeweils berechnete Kostenwert wird zu dem von der Modulsteuerung s10 des Nachfolgemoduls m10 übermittelten Kostenwert addiert und anschließend als kumulierter Kostenwert zusammen mit einer Information bezüglich des betroffenen Zielpunktes a2 mit einer Verzögerung, welche proportional zum Anteil des lokalen Kostenwertes an dem kumulierten Kostenwert ist, an die Modulsteuerungen der Vorgängermodule, im Beispielfall also an s3, versendet.

Ist das Vorgängermodul des Startmoduls ein Fördermodul mit nur einem Ausgang, wie im Beispiel das Fördermodul m9, so wird das Verfahren unmittelbar mit dem Schritt VS5 fortgesetzt, das heißt die Modulsteuerung s9 des Vorgängermoduls m9 berechnet den lokalen Kostenwert für den betroffenen Übergabepunkt Ü910 bezüglich aller ihrer Eingänge oder genauer gesagt Eingangs-Übergabepunkte, das heißt Eingängen, an welchen sie Transportgüter übergeben bekommen können. Im dargestellten Beispiel gemäß Figur 1 ist das nur der Übergabepunkt Ü89. Der berechnete Kostenwert wird zu dem von der Modulsteuerung s10 des Nachfolgemoduls m10 übermittelten Kostenwert addiert und anschließend als kumulierter Kostenwert zusammen mit einer Information bezüglich des betroffenen Zielpunktes a2 mit einer Verzögerung, welche proportional zum Anteil des lokalen Kostenwertes an dem kumulierten Kostenwert ist, an die Modulsteuerungen der Vorgängermodule, im Beispielfall also an s8, versendet.

Da alle Modulsteuerungen die Schritte VS4 und VS5 oder zumindest den Schritt VS5 ausführen, sobald eine Kostennachricht Nachricht von einem ihrer Nachfolgemodulen empfangen wurde, ist das Verfahren beendet, sobald keine neuen Kostennachrichten mehr erzeugt und versendet werden. Dieses sukzessive Ausführen der Schritte VS4 und VS5 durch die jeweiligen Vorgängermodule ist in Figur 2 durch den Pfeil 2 angedeutet.

Um die Routingtabellen bezüglich aller Zielpunkte zu befüllen, werden die beschriebenen Verfahrensschritte analog für den Zielpunkt a1 durchlaufen.

Vorteilhaft wird die Zeitspanne, um welche die Übermittlung von Kostennachrichten durch die sendende Modulsteuerung verzögert wird, derart festgelegt, dass Verarbeitungszeiten innerhalb der Modulsteuerungen sowie Sendezeiten der Kostennachrichten nicht ins Gewicht fallen. Auf diese Weise wir erreicht, dass eine Kostennachricht bezügliche eines Zielpunktes immer zuerst von demjenigen Nachfolgemodul gesendet wird, welches den kostengünstigsten weg anbietet. Die Verzögerungszeitspanne kann aber wesentlich kleiner gewählt werden als eine tatsächliche Transportzeit, z.B. um einen Proportionalitätsfaktor von 100.

Die grundlegende Idee der Erfindung besteht somit darin, dass alle Modulsteuerungen sozusagen auf den Eingang einer Kostennachricht warten, diese dann in Abhängigkeit von der Ausgestaltung des jeweils zugeordneten Fördermoduls (Weiche oder nicht?) weiterverarbeiten und gegebenenfalls ihre Vorgängermodule über die geänderten Kosten zur Erreichung eines Zielpunktes informiert. Ein entscheidender Vorteil des Verfahrens liegt dabei in der gezielten Verzögerung der Kostennachrichten, welche gewährleistet, dass Kosteninformationen, welche den jeweils kostengünstigsten Transportweg betreffen, stets zuerst empfangen werden. Auf diese Weise weiß eine Modulsteuerung sozusagen immer, welches der aktuell kostengünstigste Transportweg ist, so dass Kostennachrichten bzgl. anderer Transportwege erst gar nicht erstellt oder versendet werden.

Somit kann aber als Startmodul neben einem Fördermodul, welches einen Ausgang aufweist, der als Zielpunkt des Fördersystems dient, auch jedes andere Fördermodul des Fördersystems dienen. So ist es beispielsweise vorteilhaft, wenn ein Fördermodul, vorzugsweise selbständig, dann die Rolle des Startmoduls übernimmt, wenn sich ein lokaler Kostenwert des Fördermoduls signifikant geändert hat, sich also z.B. die lokale Transportzeit aufgrund eines Staus um einen vorgegebenen Mindestwert erhöht hat. In diesem Fall ermittelt die zugehörige Modulsteuerung zunächst für jeden Eingang des Moduls, zu welchen Kosten die von diesem Modul erreichbaren Zielpunkte des Fördersystems erreichbar sind, und übermittelt die entsprechenden Kostenwerte an die Modulsteuerungen der betroffenen Vorgängermodule. Die Kostennachricht kann dabei bereits alle betroffenen Zielpunkte sowie die zugehörigen Kostenwerte umfassen.

Ebenso kann als Startmodul vorteilhaft ein Fördermodul dienen, bei dem mindestens ein Vorgängermodul neu in das Fördersystem integriert wurde. Auch eine derartige Übernahme der Startmodul-Funktion kann selbsttätig erfolgen, da die Fördermodule oder genauer gesagt die zugehörigen Modulsteuerungen ihre unmittelbaren Nachbarn beispielsweise mit Hilfe von Plug-and-Play-Mechanismen erkennen können.

## Patentansprüche

1. Verfahren zum Aufbau oder zur Aktualisierung von Routingtabellen für ein modulares Fördersystem (1) zum Transport von Transportgütern zu jeweils zugewiesenen Zielpunkten (a1; a2), wobei
- das Fördersystem (1) mehrere Fördermodule (m1-m10) aufweist, welche jeweils mindestens einen Eingang und mindestens einen Ausgang aufweisen, die Transportgüter von einem Ausgang eines Moduls (m1-m10) an einen Eingang eines nachfolgenden Moduls (m1-m10) übergeben werden können und zum Transport der Transportgüter verschiedene Transportwege verwendet werden können;
- jedem Fördermodul (m1-m10) jeweils eine Modulsteuerung (s1-s10) zum Steuern des jeweiligen Fördermoduls (m1-m10) zugeordnet ist, wobei die Modulsteuerungen(s1-s10) von Modulsteuerungen (s1-s10) unmittelbar nachfolgender Fördermodule (m1-m10) Kostennachrichten empfangen und an Modulsteuerungen (s1-s10) unmittelbar vorhergehender Fördermodule (m1-m10) Kostennachrichten senden können, wobei
▪ die Kostennachrichten Informationen umfassen, zu welchen Kosten mindestens ein Zielpunkt (a1, a2) des Fördersystems (1) von dem jeweils sendenden Fördermodul (m1-m10) aus erreichbar ist, und
▪ die Übermittlung von Kostennachrichten durch die sendende Modulsteuerung (s1-s10) jeweils um eine Zeitspanne verzögert wird, welche proportional zum Anteil eines lokalen Kostenwertes des Moduls (m1m10) an einem jeweils übermittelten Kostenwert ist,
bei dem die eine Kostennachricht empfangende Modulsteuerung, falls diese einem Fördermodul (m1-m10) mit mindestens zwei Ausgängen zugeordnet ist (s1-s10) :
- auf Basis der übermittelten Kostenwerte eine Routingtabelle aufbaut oder aktualisiert, in welcher zu allen Ausgängen des jeweiligen Fördermoduls (m1-m10) Informationen speicherbar sind, welche Zielpunkte (a1, a2) des Fördersystems (1) von dort aus zu welchen Kosten erreichbar sind und
nach Empfang einer Kostennachricht von einem Nachfolgemodul eine eigene Kostennachricht an Vorgängermodule nur dann sendet, wenn die auf Grundlage des empfangenen Kostenwertes vorgenommene Aktualisierung der Routingtabelle für einen Zielpunkt zu einer Veränderung des kostengünstigsten Transportweges führt.

2. Verfahren nach Anspruch 1,
**dadurch gekennzeichnet, dass**
- mindestens ein Fördermodul (m1-m10) als Startmodul dient, dessen Modulsteuerung (s1-s10) für jeden Eingang des Moduls (m1-m10) die Kosten ermittelt, zu welchen mindestens ein Zielpunkt (a1, a2) des Fördersystems (1) von dort aus erreichbar ist, und eine Kostennachricht, welche zumindest eine Information über den jeweiligen Zielpunkt (a1, a2) und den zugehörigen Kostenwert umfasst, an die Modulsteuerungen (s1-s10) der betroffenen Vorgängermodule (m1-m10) übermittelt,
- Modulsteuerungen (s1-s10) für Fördermodule (m1-m10) mit nur einem Ausgang nach Empfang einer Kostennachricht für jeden Eingang des Moduls (m1-m10) kumulierte Kosten aus dem empfangenen Kostenwert und den jeweiligen lokalen Kosten berechnen und eine Kostennachricht, welche zumindest eine Information über den betroffenen Zielpunkt (a1, a2) sowie die zugehörigen kumulierten Kostenwerte umfasst, an die Modulsteuerungen (s1-s10) der betroffenen Vorgängermodule (m1-m10) übermitteln und
- Modulsteuerungen für Fördermodule (m1-m10) mit mindestens zwei Ausgängen nach Empfang einer Kostennachricht die jeweilige Routingtabelle mit Hilfe des empfangenen Kostenwertes aktualisieren und falls die Aktualisierung einen bis dahin kostengünstigsten Transportweg zu einem Zielpunkt betrifft oder sich durch die Aktualisierung ein neuer kostengünstigster Transportweg zu diesem Zielpunkt ergibt, für jeden Eingang des Moduls (m1-m10) kumulierte Kosten aus dem empfangenen Kostenwert und den jeweiligen lokalen Kosten berechnen und eine Kostennachricht, welche zumindest eine Information über den betroffenen Zielpunkt (a1, a2) sowie die zugehörigen kumulierten Kostenwerte umfasst, an die Modulsteuerungen (s1-s10) der betroffenen Vorgängermodule (m1-m10) übermitteln.

3. Verfahren nach Anspruch 2,
**dadurch gekennzeichnet, dass** als Startmodule alle Fördermodule (m1-m10) dienen, welche mindestens einen Ausgang aufweisen, welcher als Zielpunkt des Fördersystems (1) definiert ist.

4. Verfahren nach Anspruch 2,
**dadurch gekennzeichnet, dass** als Startmodul mindestens ein Fördermodul (m1-m10) dient, bei dem sich der lokale Kostenwert zwischen zumindest einem Eingang des Moduls (m1-m10) und einem Ausgang des Moduls (m1-m10), insbesondere um einen vorgegebenen Mindestwert, geändert hat.

5. Verfahren nach Anspruch 4,
**dadurch gekennzeichnet, dass** die Modulsteuerung (s1-s10) des Startmoduls für jeden Eingang des Moduls (m1-m10) ermittelt, zu welchen Kosten die von diesem Modul (m1-m10) erreichbaren Zielpunkte (a1, a2) des Fördersystems (1) erreichbar sind, und die entsprechenden Kostenwerte innerhalb einer Nachricht an die Modulsteuerungen (s1-s10) der betroffenen Vorgängermodule (m1-m10) übermittelt.

6. Verfahren nach Anspruch 2,
**dadurch gekennzeichnet, dass** als Startmodul ein Fördermodul (m1-m10) dient, bei welchem mindestens ein Vorgängermodul (m1-m10) neu in das Fördersystem (1) integriert wurde.

7. Verfahren nach einem der vorhergehenden Ansprüche,
**dadurch gekennzeichnet, dass** die Transportgüter jeweils einen von den Modulsteuerungen maschinell lesbaren Informationsträger aufweisen, auf welchem der jeweils zugewiesene Zielpunkt (a1, a2) des Transportgutes gespeichert ist.

8. Verfahren nach einem der vorhergehenden Ansprüche,
**dadurch gekennzeichnet, dass** Kostenwerte in Abhängigkeit von einer Transportzeit und/oder einer Belastung des Fördermoduls (m1-m10) und/oder der Auslastung von Transportwegen bestimmt werden.

9. Verfahren nach einem der vorhergehenden Ansprüche,
**dadurch gekennzeichnet, dass** die Zeitspanne, um welche die Übermittlung von Kostennachrichten verzögert wird, um einen vorgegebenen Proportionalitätsfaktor geringer ist als der Anteil des lokalen Kostenwertes des jeweiligen Moduls (m1-m10) am jeweils übermittelten Kostenwert.

10. Verfahren nach Anspruch 9,
**dadurch gekennzeichnet, dass** der Proportionalitätsfaktor derart festgelegt wird, dass die Zeitspanne, um welche die Übermittlung von Kostennachrichten verzögert wird, stets größer ist als eine Verzögerung, welche sich durch Verarbeitungszeiten und/oder Sendezeiten ergeben kann.

11. Verfahren nach einem der vorhergehenden Ansprüche, **dadurch gekennzeichnet, dass** die Kostennachrichten auch Informationen über die absendende Modulsteuerung der entsprechenden Kostennachricht umfassen.

12. Verfahren nach einem der vorhergehenden Ansprüche **dadurch gekennzeichnet, dass** Modulsteuerungen (s1-s10) für Fördermodule (m1-m10) mit mindestens zwei Ausgängen im Rahmen der Übermittlung von Kostennachrichten an die jeweils betroffenen Vorgängermodule (m1-m10), bereits geplante, aber noch nicht übermittelte frühere Kostennachrichten bezüglich des gleichen Zielpunktes (a1, a2) stornieren.

13. Modulares Fördersystem (1) zum Transport von Transportgütern zu jeweils zugewiesenen Zielpunkten (a1, a2) mit
- mehreren Fördermodulen (m1-m10), welche jeweils mindestens einen Eingang und mindestens einen Ausgang aufweisen, wobei die Transportgüter von einem Ausgang eines Moduls (m1-m10) an einen Eingang eines nachfolgenden Moduls (m1-m10) übergebbar sind und zum Transport der Transportgüter verschiedene Transportwege verwendbar sind,
- den Fördermodulen (m1-m10) jeweils zugeordneten Modulsteuerungen (s1-s10) zum Steuern der Fördermodule (m1-m10),
wobei die Modulsteuerungen (s1-s10) so ausgebildet sind, dass:
- sie Kommunikationsmittel aufweisen, um von Modulsteuerungen (s1-s10) unmittelbar nachfolgender Fördermodule (m1-m10) Kostennachrichten zu empfangen und an Modulsteuerungen (s1-s10) unmittelbar vorhergehender Fördermodule (m1-m10) Kostennachrichten zu senden, wobei
die Kostennachrichten Informationen umfassen, zu welchen Kosten mindestens ein Zielpunkt (a1, a2) des Fördersystems (1) von dem jeweils sendenden Fördermodul (m1-m10) aus erreichbar ist; und
- sie die eigene Übermittlung von Kostennachrichten jeweils um eine Zeitspanne verzögern, welche proportional zum Anteil eines lokalen Kostenwertes des zugeordneten Moduls (m1-m10) an einem jeweils übermittelten Kostenwert ist;
und zusätzlich Modulsteuerungen (s1-s10), die einem Fördermodul (m1-m10) mit mindestens zwei Ausgängen zugeordnet sind, so ausgebildet sind, dass:
sie die übermittelten Kostenwerte zum Aufbau oder zur Aktualisierung einer Routingtabelle benutzen und
- sie nach Empfang einer Kostennachricht von einem Nachfolgemodul eine eigene Kostennachricht an Vorgängermodule nur dann senden, wenn die auf Grundlage des empfangenen Kostenwertes vorgenommene Aktualisierung der Routingtabelle für einen Zielpunkt zu einer Veränderung des kostengünstigsten Transportweges führt.

## Claims

1. Method for constructing or updating routing tables for a modular conveying system (1) for transporting transport goods to respectively allocated destinations (a1; a2),
- the conveying system (1) having a plurality of conveying modules (m1-m10) each having at least one inlet and at least one outlet, the transport goods being able to be transferred from an outlet of one module (m1-m10) to an inlet of a subsequent module (m1-m10), and different transport routes being able to be used to transport the transport goods;
- each conveying module (m1-m10) respectively being assigned a module controller (s1-s10) for controlling the respective conveying module (m1-m10), the module controllers (s1-s10) being able to receive cost messages from module controllers (s1-s10) of immediately subsequent conveying modules (m1-m10) and being able to transmit cost messages to module controllers (s1-s10) of immediately preceding conveying modules (m1-m10),
▪ the cost messages comprising information relating to the costs at which at least one destination (a1, a2) of the conveying system (1) can be reached from the respectively transmitting conveying module (m1-m10), and
▪ the transmission of cost messages respectively being delayed by the transmitting module controller (s1-s10) by a period which is proportional to the proportion of a local cost value of the module (m1-m10) in a respectively transmitted cost value,
in which the module controller receiving a cost message, if it is assigned to a conveying module (m1-m10) having at least two outlets (s1-s10):
- constructs or updates a routing table on the basis of the transmitted cost values, which routing table can store, for all outlets of the respective conveying module (m1-m10), information relating to those destinations (a1, a2) of the conveying system (1) which can be reached from there at what costs, and
after receiving a cost message from a subsequent module, transmits its own cost message to predecessor modules only when the updating of the routing table, which is carried out on the basis of the received cost value, results in a change in the most cost-effective transport route for a destination.

2. Method according to Claim 1,
**characterized in that**
- at least one conveying module (m1-m10) is used as a starting module, the module controller (s1-s10) of which determines, for each inlet of the module (m1-m10), the costs at which at least one destination (a1, a2) of the conveying system (1) can be reached from there, and transmits a cost message comprising at least one item of information relating to the respective destination (a1, a2) and the associated cost value to the module controllers (s1-s10) of the affected predecessor modules (m1-m10),
- after receiving a cost message, module controllers (s1-s10) for conveying modules (m1-m10) having only one outlet calculate, for each inlet of the module (m1-m10), cumulated costs from the received cost value and the respective local costs and transmit a cost message comprising at least one item of information relating to the affected destination (a1, a2) and the associated cumulated cost values to the module controllers (s1-s10) of the affected predecessor modules (m1-m10), and
- after receiving a cost message, module controllers for conveying modules (m1-m10) having at least two outlets update the respective routing table with the aid of the received cost value and, if the update concerns a transport route to a destination which was hitherto the most cost-effective or if the update reveals a new most cost-effective transport route to this destination, calculate, for each inlet of the module (m1-m10), cumulated costs from the received cost value and the respective local costs and transmit a cost message comprising at least one item of information relating to the affected destination (a1, a2) and the associated cumulated cost values to the module controllers (s1-s10) of the affected predecessor modules (m1-m10).

3. Method according to Claim 2,
**characterized in that** all conveying modules (m1-m10) having at least one outlet which is defined as a destination of the conveying system (1) are used as starting modules.

4. Method according to Claim 2,
**characterized in that** at least one conveying module (m1-m10) in which the local cost value between at least one inlet of the module (m1-m10) and an outlet of the module (m1-m10) has changed, in particular by a predefined minimum value, is used as the starting module.

5. Method according to Claim 4,
**characterized in that** the module controller (s1-s10) of the starting module determines, for each inlet of the module (m1-m10), the costs at which the destinations (a1, a2) of the conveying system (1) which can be reached by this module (m1-m10) can be reached and transmits the corresponding cost values inside a message to the module controllers (s1-s10) of the affected predecessor modules (m1-m10).

6. Method according to Claim 2,
**characterized in that** a conveying module (m1-m10) in which at least one predecessor module (m1-m10) has been newly integrated into the conveying system (1) is used as the starting module.

7. Method according to one of the preceding claims,
**characterized in that** the transport goods each have an information carrier which can be machine-read by the module controllers and which store the respectively allocated destination (a1, a2) of the transport goods item.

8. Method according to one of the preceding claims,
**characterized in that** cost values are determined on the basis of a transport time and/or a load on the conveying module (m1-m10) and/or the utilization of transport routes.

9. Method according to one of the preceding claims,
**characterized in that** the period by which the transmission of cost messages is delayed is lower, by a predefined proportionality factor, than the proportion of the local cost value of the respective module (m1-m10) in the respectively transmitted cost value.

10. Method according to Claim 9,
**characterized in that** the proportionality factor is stipulated in such a manner that the period by which the transmission of cost messages is delayed is always greater than a delay which may result from processing times and/or transmission times.

11. Method according to one of the preceding claims, **characterized in that** the cost messages also comprise information relating to the module controller transmitting the corresponding cost message.

12. Method according to one of the preceding claims, **characterized in that**, during the transmission of cost messages to the respectively affected predecessor modules (m1-m10), module controllers (s1-s10) for conveying modules (m1-m10) having at least two outlets cancel earlier cost messages for the same destination (a1, a2) which have already been planned but have not yet been transmitted.

13. Modular conveying system (1) for transporting transport goods to respectively allocated destinations (a1, a2), having
- a plurality of conveying modules (m1-m10) each having at least one inlet and at least one outlet, the transport goods being able to be transferred from an outlet of one module (m1-m10) to an inlet of a subsequent module (m1-m10), and different transport routes being able to be used to transport the transport goods,
- module controllers (s1-s10) respectively assigned to the conveying modules (m1-m10) for controlling the conveying modules (m1-m10),
the module controllers (s1-s10) being designed in such a manner that:
- they have communication means in order to receive cost messages from module controllers (s1-s10) of immediately subsequent conveying modules (m1-m10) and to transmit cost messages to module controllers (s1-s10) of immediately preceding conveying modules (m1-m10),
the cost messages comprising information relating to the costs at which at least one destination (a1, a2) of the conveying system (1) can be reached from the respectively transmitting conveying module (m1-m10); and
- they respectively delay their own transmission of cost messages by a period which is proportional to the proportion of a local cost value of the assigned module (m1-m10) in a respectively transmitted cost value;
and module controllers (s1-s10) which are assigned to a conveying module (m1-m10) having at least two outlets additionally being designed in such a manner that:
they use the transmitted cost values to construct or update a routing table, and
- after receiving a cost message from a subsequent module, transmit their own cost message to predecessor modules only when the updating of the routing table carried out on the basis of the received cost value results in a change in the most cost-effective transport route for a destination.

## Revendications

1. Procédé pour établir ou pour mettre à jour des tableaux de routage pour un système de convoyage modulaire (1) destiné à transporter des marchandises à transporter vers des points de destination (a1; a2) alloués respectifs,
- le système de convoyage (1) comprenant plusieurs modules de convoyage (m1-m10) comportant à chaque fois au moins une entrée et au moins une sortie, les marchandises à transporter pouvant être livrées d'une sortie d'un module (m1-m10) à une entrée d'un module suivant (m1-m10) et différents trajets de transport pouvant être utilisés pour le transport des marchandises à transporter ;
- une commande de module (s1-s10) destinée à commander le module de convoyage respectif (m1-m10) étant à chaque fois associée à chaque module de convoyage (m1-m10), les commandes de module (s1-s10) pouvant recevoir des messages de coût de commandes de module (s1-s10) de modules de convoyage (m1-m10) immédiatement suivants et pouvant envoyer des messages de coût à des commandes de module (s1-s10) de modules de convoyage (m1-m10) immédiatement précédents,
▪ les messages de coût incluant des informations indiquant à quels coûts au moins un point de destination (a1, a2) du système de convoyage (1) est accessible depuis le module de convoyage (m1-m10) expéditeur respectif, et
▪ la transmission de messages de coût par la commande de module (s1-s10) émettrice étant à chaque fois retardée d'un intervalle de temps qui est proportionnel à la part d'une valeur de coût locale du module (m1-m10) dans une valeur de coût communiquée respective,
dans lequel, dans le cas où la commande de module (s1-s10) recevant un message de coût est associée à un module de convoyage (m1-m10) comportant au moins deux sorties, cette commande de module :
- établit ou met à jour, sur la base des valeurs de coût communiquées, un tableau de routage dans lequel peuvent être enregistrées des informations relatives à toutes les sorties du module de convoyage respectif (m1-m10) et indiquant quels points de destination (a1, a2) du système de convoyage (1) sont accessibles depuis celui-ci, et à quels coûts, et
- après réception d'un message du coût d'un module suivant, envoie son propre message de coût aux modules précédents uniquement si la mise à jour du tableau de routage effectuée sur la base de la valeur de coût reçue entraîne une modification du trajet de transport le plus économique pour un point de destination.

2. Procédé selon la revendication 1, **caractérisé en ce que**
- au moins un module de convoyage (m1-m10) dont la commande de module (s1-s10) détermine, pour chaque entrée du module (m1-m10), les coûts auxquels au moins un point de destination (a1, a2) du système de convoyage (1) est accessible depuis ce module et transmet aux commandes de module (s1-s10) des modules précédents (m1-m10) concernés un message de coût qui inclut au moins une information sur le point de destination respectif (a1, a2) et la valeur de coût correspondante fait office de module de départ,
- les commandes de module (s1-s10) pour les modules de convoyage (m1-m10) comportant une seule sortie calculent pour chaque entrée du module (m1-m10), après réception d'un message de coût, des coûts cumulés à partir de la valeur de coût reçue et des coûts locaux respectifs et transmettent aux commandes de module (s1-s10) des modules précédents (m1-m10) concernés un message de coût incluant au moins une information sur le point de destination (a1, a2) concerné ainsi que sur les valeurs de coût cumulées correspondantes et
- les commandes de module pour les modules de convoyage (m1-m10) comportant au moins deux sorties mettent à jour, après réception d'un message de coût, le tableau de routage respectif à l'aide de la valeur de coût reçue et, dans le cas où la mise à jour concerne un trajet de transport vers un point de destination s'avérant le plus économique jusqu'à présent ou dans le cas où il résulte de la mise à jour un nouveau trajet de transport le plus économique vers ce point de destination, ces commandes de module calculent, pour chaque entrée du module (m1-m10), des coûts cumulés à partir de la valeur de coût reçue et des coûts locaux respectifs et transmettent aux commandes de module (s1-s10) des modules précédents (m1-m10) concernés un message de coût qui inclut au moins une information sur le point de destination (a1, a2) concerné ainsi que sur les valeurs de coût cumulées correspondantes.

3. Procédé selon la revendication 2, **caractérisé en ce que** tous les modules de convoyage (m1-m10) comportant au moins une sortie définie comme point de destination du système de convoyage (1) font office de modules de départ.

4. Procédé selon la revendication 2, **caractérisé en ce qu'**au moins un module de convoyage (m1-m10) au niveau duquel la valeur de coût locale a varié, notamment d'une valeur minimale prédéterminée, entre au moins une entrée du module (m1-m10) et une sortie du module (m1-m10) fait office de module de départ.

5. Procédé selon la revendication 4, **caractérisé en ce que** la commande de module (s1-s10) du module de départ détermine, pour chaque entrée du module (m1-m10), à quels coûts les points de destination (a1, a2) du système de convoyage (1) accessibles depuis ce module (m1-m10) sont accessibles et communique les valeurs de coût correspondantes à l'intérieur d'un message transmis aux commandes de module (s1-s10) des modules précédents (m1-m10) concernés.

6. Procédé selon la revendication 2, **caractérisé en ce qu'**un module de convoyage (m1-m10) au niveau duquel au moins un module précédent (m1-m10), nouveau, a été intégré dans le système de convoyage (1) fait office de module de départ.

7. Procédé selon l'une des revendications précédentes, **caractérisé en ce que** les marchandises à transporter comprennent à chaque fois un support d'information lisible mécaniquement par les commandes de module sur lequel est enregistré le point de destination (a1, a2) alloué respectif de la marchandise à transporter.

8. Procédé selon l'une des revendications précédentes, **caractérisé en ce que** les valeurs de coût sont déterminées en fonction d'une durée de transport et/ou d'une charge du module de convoyage (m1-m10) et/ou de l'utilisation de trajets de transport.

9. Procédé selon l'une des revendications précédentes, **caractérisé en ce que** l'intervalle de temps dont est retardée la transmission de messages de coût est réduit d'un facteur de proportionnalité prédéterminé par rapport à la part de la valeur de coût locale du module respectif (m1-m10) dans la valeur de coût communiquée respective.

10. Procédé selon la revendication 9, **caractérisé en ce que** le facteur de proportionnalité est fixé de manière à ce que l'intervalle de temps dont est retardée la transmission de messages de coût est toujours supérieur à un retard pouvant être occasionné par des temps de traitement et/ou des temps d'émission.

11. Procédé selon l'une des revendications précédentes, **caractérisé en ce que** les messages de coût incluent également des informations sur la commande de module qui envoie le message de coût correspondant.

12. Procédé selon l'une des revendications précédentes, **caractérisé en ce que** les commandes de module (s1-s10) pour les modules de convoyage (m1-m10) comportant au moins deux sorties annulent, dans le cadre de la transmission de messages de coût aux modules précédents (m1-m10) concernés respectifs, des messages de coût antérieurs concernant le même point de destination (a1, a2) qui sont déjà planifiés mais pas encore transmis.

13. Système de convoyage modulaire (1) pour le transport de marchandises à transporter vers des points de destination (a1, a2) alloués respectifs, comprenant
- plusieurs modules de convoyage (m1-m10) qui comportent à chaque fois au moins une entrée et au moins une sortie, les marchandises à transporter pouvant être livrées d'une sortie d'un module (m1-m10) à une entrée d'un module suivant (m1-m10) et différents trajets de transport pouvant être utilisés pour le transport des marchandises à transporter,
- des commandes de module (s1-s10) destinées à commander les modules de convoyage (m1-m10) associées à chaque fois aux modules de convoyage (m1-m10),
les commandes de module (s1-s10) étant conçues de manière à :
- comprendre des moyens de communication pour recevoir des messages de coût de commandes de module (s1-s10) de modules de convoyage (m1-m10) immédiatement suivants et envoyer des messages de coût à des commandes de module (s1-s10) de modules de convoyage (m1-m10) immédiatement précédents,
les messages de coût incluant des informations indiquant à quels coûts au moins un point de destination (a1, a2) du système convoyage (1) est accessible depuis le module de convoyage (m1-m10) expéditeur respectif ; et
- retarder leur propre transmission de messages de coût à chaque fois d'un intervalle de temps qui est proportionnel à la part d'une valeur de coût locale du module associé (m1-m10) dans une valeur de coût communiquée respective ;
et, en plus, des commandes de module (s1-s10) associées à un module de convoyage (m1-m10) comportant au moins deux sorties étant conçues de manière :
- à utiliser les valeurs de coût communiquées pour établir ou pour mettre à jour un tableau de routage et
- à envoyer leur propre message de coût à des modules précédents, après réception d'un message de coût d'un module suivant, uniquement si la mise à jour du tableau de routage effectuée sur la base de la valeur de coût reçue entraîne une modification du trajet de transport le plus économique pour un point de destination.
